(19) **Europäisches Patentamt / European Patent Office / Office européen des brevets**

(11) **EP 1 052 269 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**05.11.2008 Patentblatt 2008/45**

(51) Int Cl.:
**C08K 13/02** $^{(2006.01)}$    **C08L 67/02** $^{(2006.01)}$
**C08J 5/18** $^{(2006.01)}$    **B32B 27/18** $^{(2006.01)}$
C08K 13/02 $^{(2006.01)}$    C08K 5/34 $^{(2006.01)}$
C08K 3/22 $^{(2006.01)}$

(45) Hinweis auf die Patenterteilung:
**06.04.2005 Patentblatt 2005/14**

(21) Anmeldenummer: **00107813.8**

(22) Anmeldetag: **12.04.2000**

(54) **Weisse, UV-stabilisierte Folie aus einem kristallisierbaren Thermoplast**

White UV stabilised sheet made of a crystallisable thermoplast

Feuille blanche, en résine thermoplastique crystallisable, stabilisée vis-à-vis de l' UV

(84) Benannte Vertragsstaaten:
**DE FR GB IT LU**

(30) Priorität: **10.05.1999 DE 19921341**
        **23.09.1999 DE 19945559**

(43) Veröffentlichungstag der Anmeldung:
**15.11.2000 Patentblatt 2000/46**

(73) Patentinhaber: **Mitsubishi Polyester Film GmbH**
**65203 Wiesbaden (DE)**

(72) Erfinder:
 • **Murschall, Ursula**
  **55283 Nierstein (DE)**
 • **Crass, Günther**
  **65232 Taunusstein (DE)**
 • **Bewer, Günter**
  **65207 Wiesbaden (DE)**
 • **Oberländer, Klaus**
  **65207 Wiesbaden (DE)**

(74) Vertreter: **Schweitzer, Klaus**
**Plate Schweitzer Zounek**
**Patentanwälte**
**Rheingaustrasse 196**
**65203 Wiesbaden (DE)**

(56) Entgegenhaltungen:
**EP-A- 0 200 190**    **WO-A-98/06575**
**US-A- 5 680 720**

 • **PATENT ABSTRACTS OF JAPAN vol. 017, no. 689 (C-1143), 16. Dezember 1993 (1993-12-16) -& JP 05 230238 A (TOYOBO CO LTD), 7. September 1993 (1993-09-07)**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft eine weiße, UV-stabilisierte Folie aus einem kristallisierbaren Thermoplast, deren Dicke im Bereich von 1 bis 500 μm liegt. Die Folie enthält mindestens ein Pigment und einen UV-Stabilisator als Lichtschutzmittel und zeichnet sich durch eine gute Verstreckbarkeit, durch sehr gute optische und mechanische Eigenschaften aus. Die Erfindung betrifft ferner ein Verfahren zur Herstellung dieser Folie und ihre Verwendung.

Weiße Folien mit einer Dicke zwischen 1 und 500 μm sind hinreichend bekannt.

Diese Folien enthalten keinerlei UV-Stabilisatoren als Lichtschutzmittel, so daß sich weder die Folien noch die daraus hergestellten Artikel für Außenanwendungen eignen. Bei Außenanwendungen zeigen diese Folien bereits nach kurzer Zeit eine Vergilbung und eine Verschlechterung der mechanischen Eigenschaften infolge eines photooxidativen Abbaus durch Sonnenlicht.

In der EP-A-0 620 245 sind Folien beschrieben, die hinsichtlich ihrer thermischen Stabilität verbessert sind. Diese Folien enthalten Antioxidationsmittel, welche geeignet sind, in der Folie gebildete Radikale abzufangen und gebildetes Peroxid abzubauen. Ein Vorschlag, wie die UV-Stabilität solcher Folien zu verbessern sei, ist dieser Schrift jedoch nicht zu entnehmen.

In der WO 98/06575 wird eine matte, siegelbare Folie beschrieben, die mindestens einen UV-Absorber enthält. Der UV-Absorber hat hier die Aufgabe, die mechanischen Eigenschaften der Folie nach der Bewitterung nicht dramatisch zu verschlechtern. Die Siegelfähigkeit wird dadurch erreicht, daß die Folie mit einem Copolyester koextrudiert ist. Die nicht siegelfähige Seite muß rauh sein und damit niedrigglänzend und matt sein, damit die Folie wickelbar und weiterverarbeitbar ist, da sich derartige Copolyester durch ein starkes Verkleben mit der nicht siegelbaren Seite auszeichnen. Durch die hohe Rauhigkeit und Zudosierung von Pigmenten wird die Klebeneigung reduziert. Ein Vorschlag, wie ein niedriger Gelbwert (< 55) eingestellt werden kann, ist der Schrift nicht zu entnehmen.

Aufgabe der vorliegenden Erfindung war es, eine weiße Folie mit einer Dicke von 1 bis 500 μm bereitzustellen, die neben einer guten Verstreckbarkeit, guten mechanischen sowie optischen Eigenschaften, einer niedrigen Gelbzahl vor allem eine hohe UV-Stabilität aufweist und einen hohen Lichtschutz bietet.

Eine hohe UV-Stabilität bedeutet, daß die Folien durch Sonnenlicht oder andere UV-Strahlung nicht oder nur extrem wenig geschädigt werden, so daß sich die Folien für Außenanwendungen und/oder kritische Innenanwendungen eignen. Insbesondere sollen die Folien bei mehrjähriger Außenanwendung nicht vergilben, keine Versprödung oder Rißbildung der Oberfläche zeigen und auch keine Verschlechterung der mechanischen Eigenschaften aufweisen. Hohe UV-Stabilität bedeutet demnach, daß die Folie das UV-Licht absorbiert und Licht erst im sichtbaren Bereich durchläßt.

Zu den guten optischen Eigenschaften zählen beispielsweise eine homogene, streifenfreie Einfärbung, eine niedrige Lichttransmission (≤80%), ein akzeptabler Oberflächenglanz, sowie eine im Vergleich zur unstabilisierten Folie nahezu unveränderte Gelbzahl.

Zu den guten mechanischen Eigenschaften zählt unter anderem ein hoher E-Modul ($E_{MD}$ > 3300 N/mm$^2$; $E_{TD}$ > 4800 N/mm$^2$) sowie gute Reißfestigkeitswerte (in MD > 130 N/mm$^2$; in TD > 180 N/mm$^2$) und gute Reißdehnungswerte in Längs- und Querrichtung (in MD > 120 %; in TD > 70 %).

Zu der guten Verstreckbarkeit zählt, daß sich die Folie bei ihrer Herstellung sowohl in Längs- als auch in Querrichtung hervorragend und ohne Abrisse orientieren läßt.

Darüber hinaus sollte die erfindungsgemäße Folie rezyklierbar sein, insbesondere ohne Verlust der optischen und der mechanischen Eigenschaften, sowie gegebenenfalls schwer brennbar, damit sie beispielsweise auch für Innenanwendungen und im Messebau eingesetzt werden kann.

Gelöst wird diese Aufgabe durch eine Weiße, biaxial orientierte Folie mit mehrschichtiger Struktur aus mindestens einer Deckschicht (A) und mindestens einer Kernschicht (B), mit einer Dicke im Bereich von 1 bis 500 μm, die als Hauptbestandteil einen kristallisierbaren Thermoplasten enthält, **dadurch gekennzeichnet, dass** sie a) mindestens einen UV-Stabilisator und b) Titandioxid als Weißpigment mit einer mittleren Teilchengröße von 0,10 bis 0,30 μm enthält, wobei die Komponenten a) und b) über die Masterbatchtechnologie zugeführt werden und der Oberflächenglanz, gemessen nach DIN 67530 (Meßwinkel 20°), größer als 15 ist und die Lichttransmission, gemessen nach ASTM D 1003, kleiner als 80 % beträgt.

Die weiße Folie enthält als Hauptbestandteil einen kristallisierbaren Thermoplasten. Geeignete kristallisierbare bzw. teilkristalline Thermoplaste sind beispielsweise Polyethylenterephthalat, Polybutylenterephthalat, Polyethylennaphthalat, wobei Polyethylenterephthalat bevorzugt ist.

Erfindungsgemäß versteht man unter kristallisierbarem Thermoplasten

- kristallisierbare Homopolymere,
- kristallisierbare Copolymere,
- kristallisierbare Compounds,
- kristallisierbares Rezyklat und
- andere Variationen von kristallisierbaren Thermoplasten.

Die weiße Folie ist mehrschichtig. Die weiße Folie kann ebenfalls mit diversen Copolyestern oder Haftvermittlern beschichtet sein.

Die weiße Folie enthält mindestens einen UV-Stabilisator als Lichtschutzmittel, der über die sogenannte Masterbatch-Technologie direkt bei der Folienherstellung zudosiert wird, wobei die Konzentration des UV-Stabilisators vorzugsweise zwischen 0,01 Gew.-% und 5 Gew.-%, bezogen auf das Gewicht des kristallisierbaren Thermoplasten, liegt.

Die weiße Folie enthält darüber hinaus Titandioxid als Pigment zur Weißfärbung, wobei die Konzentration des Pigmentes vorzugsweise zwischen 0,3 Gew.-% und 25 Gew.-%, bezogen auf das Gewicht des kristallisierbaren Thermoplasten, liegt. Auch das Weißpigment wird über die sogenannte Masterbatch-Technologie direkt bei der Folienherstellung zudosiert.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild infolge von Farbänderung bzw. Vergilbung ändert, sondern auch die mechanisch-physikalischen Eigenschaften negativ beeinflußt werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360 nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in $\alpha$-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für weiße Folien ungeeignet, da sie zur Verfärbung oder Farbänderung führen. Für weiße Folien sind nur organische und metallorganische Verbindungen geeignet, die dem zu stabilisierenden Thermoplasten keine oder nur eine extrem geringe Farbe oder Farbänderung verleihen. Geeignete UV-Stabilisatoren als Lichtschutzmittel sind UV-Stabilisatoren, die mindestens 70 %, vorzugsweise 80 %, besonders bevorzugt 90 %, des UV-Lichts im Wellenlängenbereich von 180 nm bis 380 nm, vorzugsweise 280 bis 350 nm absorbieren. Diese sind insbesondere geeignet, wenn sie im Temperaturbereich von 260 bis 300 °C thermisch stabil sind, d.h. sich nicht zersetzen und nicht zur Ausgasung führen. Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

Als weiteren erfindungsgemäßen Bestandteil enthält die Folie ggf. einen optischen Aufheller. Die erfindungsgemäßen optischen Aufheller sind in der Lage, UV-Strahlen im Wellenlängenbereich von ca. 360 bis 380 nm zu absorbieren und als längerwelliges, sichtbares blauviolettes Licht wieder abzugeben. Geeignete optische Aufheller sind Bisbenzoxazole, Phenylcumarine und Bis-sterylbiphenyle, insbesondere Phenylcumarin, besonders bevorzugt Triazin-phenylcumarin (Tinopal®, Ciba-Geigy, Basel, Schweiz).

Sofern zweckmäßig, können neben dem optischen Aufheller auch noch in Polyester lösliche blaue Farbstoffe zugesetzt werden. Als geeignete blaue Farbstoffe haben sich Kobaltblau, Ultramarinblau und Anthrachinonfarbstoffe, insbesondere Sudanblau 2 (BASF, Ludwigshafen, Bundesrepublik Deutschland) erwiesen.

Die optischen Aufheller werden in Mengen von 10 ppm bis 50.000 ppm, insbesondere 20 ppm bis 30.000 ppm, besonders bevorzugt 50 ppm bis 25.000 ppm (bezogen auf das Gewicht der auszurüstenden Schicht) eingesetzt.

Die blauen Farbstoffe werden in Mengen von 10 ppm bis 10.000 ppm, insbesondere 20 ppm bis 5.000 ppm, besonders bevorzugt 50 ppm bis 1.000 ppm (bezogen auf das Gewicht der auszurüstenden Schicht) eingesetzt.

Das verwendete Weißpigment ist Titandioxid.

Die Titandioxidteilchen können aus Anatas oder Rutil bestehen, vorzugsweise überwiegend aus Rutil, welcher im Vergleich zu Anatas eine höhere Deckkraft zeigt. In bevorzugter Ausführungsform bestehen die Titandioxidteilchen zu mindestens 95 Gew.-% aus Rutil. Sie können nach einem üblichen Verfahren, z. B: nach dem Chlorid- oder dem Sulfat-Prozeß, hergestellt werden. Ihre Menge in der Basisschicht beträgt zweckmäßigerweise 0,3 - 25 Gew.-%, bezogen auf die Basisschicht. Die mittlere Teilchengröße ist relativ klein und liegt im Bereich von 0,10 bis 0,30 $\mu$m.

Durch Titandioxid der beschriebenen Art entstehen innerhalb der Polymermatrix keine Vakuolen während der Folienherstellung.

Die Titandioxidteilchen können einen Überzug aus anorganischen Oxiden besitzen, wie er üblicherweise als

Überzug für TiO$_2$-Weißpigment in Papieren oder Anstrichmitteln zur Verbesserung der Lichtechtheit eingesetzt wird.

TiO$_2$ ist bekanntlich fotoaktiv. Bei Einwirkung von UV-Strahlen bilden sich freie Radikale auf der Oberfläche der Partikel. Diese freien Radikale können in die Polymermatrix wandern, was zu Abbaureaktionen und Vergilbung führt. Um dies zu vermeiden, können die TiO$_2$-Partikel oxidisch beschichtet werden. Zu den besonders geeigneten Oxiden für die Beschichtung gehören die Oxide von Aluminium, Silicium, Zink oder Magnesium oder Mischungen aus zwei oder mehreren dieser Verbindungen. TiO$_2$ Partikel mit einem Überzug aus mehreren dieser Verbindungen werden z. B. in der EP-A-0 044 515 und EP-A-0 078 633 beschrieben. Weiterhin kann der Überzug organische Verbindungen mit polaren und unpolaren Gruppen enthalten. Die organischen Verbindungen müssen bei der Herstellung der Folie durch Extrusion der Polymer-schmelze ausreichend thermostabil sein. Polare Gruppen sind beispielsweise -OH;-OR; -COOX; (X = R; H oder Na, R = Alkyl mit 1 - 34 C-Atomen). Bevorzugte organische Verbindungen sind Alkanole und Fettsäuren mit 8 - 30 C-Atomen in der Alkylgruppe, insbesondere Fettsäuren und primäre n-Alkanole mit 12 - 24 C-Atomen, sowie Polydiorganosiloxane und/oder Polyorganohydrogensiloxane wie z. B. Polydimethylsiloxan und Polymethylhydrogensiloxan.

. Der Überzug für die Titandioxidteilchen besteht gewöhnlich aus 1 bis 12, insbesondere 2 bis 6 g anorganischer Oxide und/oder 0,5 bis 3, insbesondere 0,7 bis 1,5 g organischer Verbindung, bezogen auf 100 g Titandioxidteilchen. Der Überzug wird üblicherweise auf die Teilchen in wäßriger Suspension aufgebracht. Die anorganischen Oxide können aus wasserlöslichen Verbindungen, z. B. Alkali-, insbesondere Natriumnitrat, Natriumsilikat (Wasserglas) oder Kieselsäure in der wäßrigen Suspension ausgefällt werden.

Unter anorganischen Oxiden wie Al$_2$O$_3$ oder SiO$_2$ sind auch die Hydroxide oder deren verschiedenen Entwässerungsstufen wie z. B. Oxidhydrat zu verstehen, ohne daß man deren genaue Zusammensetzung und Struktur kennt. Auf das TiO$_2$-Pigment werden nach dem Glühen und Mahlen in wäßriger Suspension die Oxidhydrate z. B. des Aluminiums und/oder Silicium gefällt, die Pigmente dann gewaschen und getrocknet. Diese Ausfällung kann somit direkt in einer Suspension geschehen, wie sie im Herstellungsprozeß nach der Glühung und der sich anschließenden Naßmahlung anfällt. Die Ausfällung der Oxide und/oder Oxidhydrate der jeweiligen Metalle erfolgt aus den wasserlöslichen Metallsalzen im bekannten pH-Bereich, für das Aluminium wird beispielsweise Aluminiumsulfat in wäßriger Lösung (pH kleiner 4) eingesetzt und durch Zugabe von wäßriger Amoniaklösung oder Natronlauge im pH-Bereich zwischen 5 und 9, vorzugsweise zwischen 7 und 8,5, das Oxidhydrat gefällt. Geht man von eine Wasserglas- oder Alkalialuminatlösung aus, sollte der pH-Wert der vorgelegten TiO$_2$-Suspension im stark alkalischen Bereich (pH größer 8) liegen. Die Ausfällung erfolgt dann durch Zugabe von Mineralsäure wie Schwefelsäure im pH-Bereich 5 bis 8. Nach der Ausfällung der Metalloxide wird die Suspension noch 15 min bis etwa 2 h gerührt, wobei die ausgefällten Schichten eine Alterung erfahren. Das beschichtete Produkt wird von der wäßrigen Dispersion abgetrennt und nach dem Waschen bei erhöhter Temperatur, insbesondere bei 70 bis 100°C, getrocknet.

Es war völlig überraschend, daß der Einsatz der obengenannten UV-Stabilisatoren und ggf. Aufheller in Folien zu dem gewünschten Ergebnis führte. Der Fachmann hätte vermutlich zunächst versucht, eine gewisse UV-Stabilität über ein Antioxidanz zu erreichen, hätte jedoch nach Bewitterung festgestellt, daß die Folie schnell gelb wird.

Vor dem Hintergrund, daß UV-Stabilisatoren, die das UV-Licht absorbieren und somit Schutz bieten, hätte der Fachmann wohl handelsübliche UV-Stabilisatoren eingesetzt. Dabei hätte er festgestellt, daß

- der UV-Stabilisator eine mangelnde thermische Stabilität hat und sich bei Temperaturen zwischen 200 °C und 240 °C zersetzt oder ausgast ;
- er große Mengen (ca. 10 bis 15 Gew.-%) UV-Stabilisator einarbeiten muß, damit das UV-Licht absorbiert wird und damit die Folie nicht geschädigt wird.

Bei diesen hohen Konzentrationen hätte er festgestellt, daß die Folie schon nach der Herstellung gelb ist, bei Gelbzahlunterschieden (YID) um die 25. Des weiteren hätte er festgestellt, daß die mechanischen Eigenschaften negativ beeinflußt werden. Beim Verstrecken hätte er ungewöhnliche Probleme bekommen wie

- Abrisse wegen mangelnder Festigkeit, d.h. E-Modul
- Düsenablagerungen, was zu Profilschwankungen führt
- Walzenablagerungen vom UV-Stabilisator, was zur Beeinträchtigung der optischen Eigenschaften (Klebedefekt, inhomogene Oberfläche) führt
- Ablagerungen in Streck-, Fixierrahmen, die auf die Folie tropfen.

Daher war es mehr als überraschend, daß bereits mit niedrigen Konzentrationen des erfindungsgemäßen UV-Stabilisators ggf. in Kombination mit dem optischen Aufheller und dem blauen Farbstoff ein hervorragender UV-Schutz erzielt wurde. Sehr überraschend war, daß sich bei diesem hervorragenden UV-Schutz

- der Gelbwert der Folie im Vergleich zu einer nicht-stabilisierten Folie im Rahmen der Meßgenauigkeit nicht ändert;
- keine Ausgasungen, keine Düsenablagerungen, keine Rahmenausdampfungen einstellten, wodurch die Folie eine exzellente Optik aufweist und ein ausgezeichnetes Profil und eine ausgezeichnete Planlage hat.;

- sich die UV-stabilisierte Folie durch eine hervorragende Streckbarkeit auszeichnet, so daß sie verfahrenssicher und stabil auf high speed film lines bis zu Geschwindigkeiten von 420 m/min produktionssicher hergestellt werden kann. Damit ist die Folie auch wirtschaftlich rentabel.

Des weiteren ist sehr überraschend, daß auch das Regenerat wieder einsetzbar ist, ohne den Gelbwert der Folie negativ zu beeinflussen.

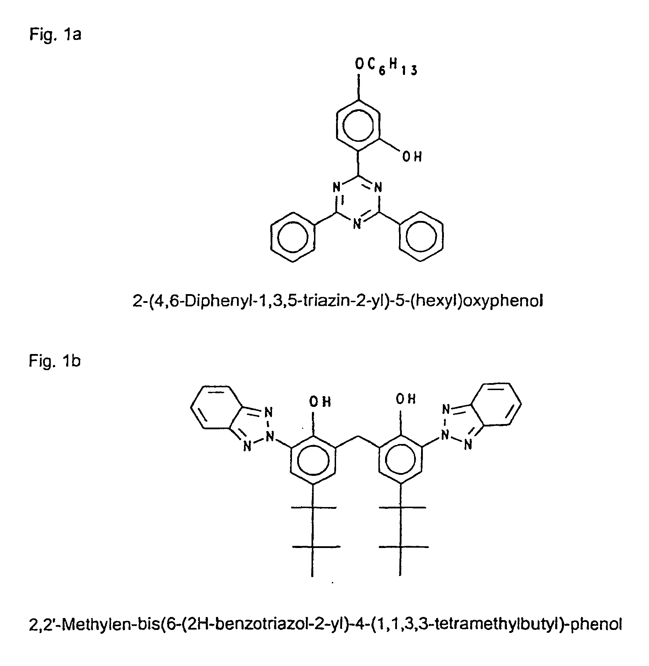

In einer besonders bevorzugten Ausführungsform enthält die erfindungsgemäße, weiße Folie als Hauptbestandteil ein kristallisierbares Polyethylenterephthalat und 0,01 Gew.-% bis 5,0 Gew.-% 2-(4,6-Diphenyl-1,3,5-triazin-2-yl)-5-(hexyl)oxy-phenol (Struktur in Fig. 1a) oder 0,01 Gew.-% bis 5,0 Gew.-% 2,2'-Methylen-bis(6-(2H-benzotriazol-2-yl)-4-(1,1,3,3-tetramethylbutyl)-phenol (Struktur in Fig. 1b) sowie 0,3 Gew.-% bis 25 Gew.-% Titandioxid, mit einem Teilchendurchmesser von 0,10 bis 0,30 $\mu$m, wobei ein Titandioxid vom Rutil-Typ bevorzugt wird. In einer bevorzugten Ausführungsform können auch Mischungen der genannten UV-Stabilisatoren oder Mischungen von mindestens einem der bevorzugten UV-Stabilisatoren mit anderen UV-Stabilisatoren eingesetzt werden, wobei die Gesamtkonzentration an Lichtschutzmittel vorzugsweise zwischen 0,01 Gew.-% und 5,0 Gew.-%, bezogen auf das Gewicht an kristallisierbarem Polyethylenterephthalat, liegt.

Der Oberflächenglanz, gemessen nach DIN 67530 (Meßwinkel 20°) ist größer als 15, vorzugsweise größer als 20.

Die Lichttransmission (Transparenz), gemessen nach ASTM-D 1003, ist kleiner als 80%, vorzugsweise kleiner als 70%. Die Einfärbung ist homogen und streifenfrei über die Lauflänge und die Folienbreite.

Der E-Modul (ISO 527-1-2-) in Längsrichtung liegt bei größer 3300 N/mm$^2$, vorzugsweise bei größer 3600 N/mm$^2$. Der E-Modul (ISO 527-1-2) in Querrichtung liegt bei größer 4800 N/mm$^2$, vorzugsweise bei größer 5100 N/mm$^2$

Die Standardviskosität SV (DCE) des Polyethylenterephthalats, gemessen in Dichloressigsäure nach DIN 53728, liegt zwischen 600 und 1000, vorzugsweise zwischen 700 und 900.

Die intrinsische Viskosität IV (DCE) berechnet sich aus der Standardviskosität SV (DCE) wie folgt:

$$IV\ (DCE) = 6{,}67 \cdot 10^{-4}\ SV\ (DCE) + 0{,}118$$

Die weiße Polyethylenterephtalat-Folie, die ein Weißpigment und einen UV-Stabilisator und ggf. einen optischen Aufheller enthält, ist mehrschichtig.

In der mehrschichtigen Ausführungsform ist die Folie aus mindestens einer Kernschicht und mindestens einer Deckschicht aufgebaut, wobei insbesondere ein dreischichtiger A-B-A oder A-B-C Aufbau bevorzugt ist.

Für diese Ausführungsform ist es wesentlich, daß das Polyethylenterephthalat der Kernschicht eine ähnliche Standardviskosität besitzt wie das Polyethylenterephthalat der Deckschicht (en), die an die Kernschicht angrenzt (angrenzen).

In einer besonderen Ausführungsform können die Deckschichten auch aus einem Polyethylennaphthalat-Homopolymeren oder aus einem Polyethylenterephthalat-Polyethylennaphthalat-Copolymeren oder einem Compound bestehen.

In dieser Ausführungsform haben die Thermoplaste der Deckschichten ebenfalls eine ähnliche Standardviskosität wie das Polyethylenterephthalat der Kernschicht.

In der mehrschichtigen Ausführungsform ist das Weißpigment vorzugsweise in der Kernschicht enthalten. Bei Bedarf können auch die Deckschichten mit Weißpigment ausgerüstet sein.

In der mehrschichtigen Ausführungsform ist der UV-Stabilisator und ggf. der optische Aufheller und ggf. der blaue Farbstoff vorzugsweise in der bzw. den Deckschichten enthalten. Jedoch kann nach Bedarf auch die Kernschicht mit UV-Stabilisatoren und ggf. optischem Aufheller und ggf. blauem Farbstoff ausgerüstet sein.

Anders als in der einschichtigen Ausführungsform bezieht sich hier die Konzentration des oder der Stabilisatoren (Aufheller/blauer Farbstoff) auf das Gewicht der Thermoplasten in der mit UV-Stabilisator(en) (Aufheller/blauer Farbstoff) ausgerüsteten Schicht.

Die Folie kann auch mindestens einseitig mit einer kratzfesten Beschichtung, mit einem Copolyester oder mit einem Haftvermittler versehen sein.

Ganz überraschend haben Bewitterungsversuche nach der Testspezifikation ISO 4892 mit dem Atlas CI65 Weather Ometer gezeigt, daß es im Falle einer dreischichtigen Folie durchaus ausreichend ist, die 0,5 $\mu$m bis 2 $\mu$m dicken Deckschichten mit UV-Stabilisatoren ggf. in Kombination mit einem optischen Aufheller und blauem Farbstoff auszurüsten.

Dadurch werden die mit der bekannten Koextrusionstechnologie hergestellten UV-stabilisierten, mehrschichtigen Folien im Vergleich zu den komplett UV-stabilisierten Monofolien wirtschaftlich interessant, da deutlich weniger UV-Stabilisator zum Erreichen einer vergleichbaren UV-Stabilität benötigt wird.

Bewitterungstests haben ergeben, daß die erfindungsgemäßen UV-stabilisierten Folien selbst nach 5 bis 7 Jahren (aus den Bewitterungstests hochgerechnet) Außenanwendung im allgemeinen keine erhöhte Vergilbung, keine Versprödung, keinen Glanzverlust der Oberfläche, keine Rißbildung an der Oberfläche und keine Verschlechterung der mechanischen Eigenschaften aufweisen.

Bei der Herstellung der Folie wurde festgestellt, daß sich die UV-stabilisierte Folie hervorragend in Längs- und in Querrichtung ohne Abrisse orientieren läßt. Des weiteren wurden keinerlei Ausgasungen des UV-Stabilisators und/ oder ggf. des optischen Aufheller und/oder des blauen Farbstoffes im Produktionsprozeß gefunden, was erfindungswesentlich ist, da die meisten UV-Stabilisatoren bei Extrusionstemperaturen über 260°C störende, unangenehme Ausgasungen zeigen und damit untauglich sind.

Darüber hinaus ergaben Messungen, daß die erfindungsgemäße PET-Folie ab einer Dicke von 300 $\mu$m schwer brennbar und schwer entflammbar ist, so daß sie sich beispielsweise für Innenanwendungen und im Messebau eignet. Überraschenderweise erfüllen schon erfindungsgemäße Folien im Dickenbereich von 350 bis 500 $\mu$m die Baustoffklasse B2. 350 bis 500 $\mu$m dicke Folien erfüllen überraschenderweise auch die Brandstoffklasse S4 nach DIN 5510, Rauchentwicklung SR2, Tropfbarkeit ST1.

Des weiteren ist die erfindungsgemäße Folie ohne Umweltbelastung und ohne Verlust der mechanischen Eigenschaften problemlos rezyklierbar, wodurch sie sich beispielsweise für die Verwendung als kurzlebige Werbeschilder oder anderer Werbeartikel eignet.

Die Herstellung der erfindungsgemäßen, weißen, UV-stabilisierten Folie kann beispielsweise nach einem Extrusionsverfahren in einer Extrusionsstraße erfolgen.

Erfindungsgemäß kann das Weißpigment, das Lichtschutzmittel, ggf. der optische Aufheller und ggf. der blaue Farbstoff bereits beim Thermoplast-Rohstoffhersteller zudosiert werden.

Die Zugabe des Lichtschutzmittels und des Weißpigments und ggf. des optischen Aufhellers und/oder ggf. des blauen Farbstoffes erfolgt über die Masterbatchtechnologie. Die obengenannten lichtschutzaktiven Komponenten bzw. das Weißpigment werden in einem festen Trägermaterial voll dispergiert. Als Trägermaterialien kommen der Thermoplast selbst, wie z. B. das Polyethylenterephthalat oder auch andere Polymere, die mit dem Thermoplasten ausreichend verträglich sind, in Frage.

Wichtig ist, daß die Korngröße und das Schüttgewicht des Masterbatches ähnlich der Korngröße und dem Schüttgewicht des Thermoplasten ist, so daß eine homogene Verteilung und damit eine homogene UV-Stabilisierung und ein homogener Weißgrad erreicht wird.

Die Polyesterfolien können nach bekannten Verfahren aus einem Polyesterrohstoff mit ggf. weiteren Rohstoffen sowie dem UV-Stabilisator, dem Weißpigment, ggf. dem optischen Aufheller, ggf. dem blauen Farbstoff und/oder ggf. weiteren üblichen Additiven in üblicher Menge von 0,1 bis maximal 10 Gew.-% als mehrschichtige, ggf. koextrudierte Folien mit gleichen oder unterschiedlich ausgebildeten Oberflächen hergestellt werden, wobei eine Oberfläche beispielsweise pigmentiert/UV-stabil ausgerüstet ist und die andere Oberfläche kein Pigment und/oder UV-Stabilisator enthält. Ebenso können eine oder beide Oberflächen der Folie nach bekannten Verfahren mit einer üblichen funktionalen Beschichtung versehen werden.

Bei dem bevorzugten Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und in Längsrichtung bzw. in Längs-, in Quer- und nochmals in Längsrichtung und/oder Querrichtung gestreckt. Die Strecktemperaturen liegen im allgemeinen bei $T_g$ + 10 °C bis $T_g$ + 60 °C ($T_g$ = Glastemperatur), das Streckverhältnis der Längsstreckung liegt üblicherweise bei 2 bis 6, insbesondere bei 3 bis 4,5, das der Querstreckung bei 2 bis 5, insbesondere bei 3 bis 4,5, und das der ggf. durchgeführten zweiten Längsstreckung bei 1,1 bis 3. Die erste Längsstreckung kann ggf. gleichzeitig mit der Querstreckung (Simultanstreckung) durchgeführt werden. Anschließend folgt die Thermofixierung der Folie bei Ofentemperaturen von 200 bis 260 °C, insbesondere bei 220 bis 250 °C. Anschließend wird die Folie abgekühlt und aufgewickelt.

Durch die überraschende Kombination ausgezeichneter Eigenschaften eignet sich die erfindungsgemäße, weiße, UV-stabilisierte Folie hervorragend für eine Vielzahl verschiedener Anwendungen, beispielsweise für Innenraumverkleidungen, für Messebau und Messeartikel, für Displays, für Schilder, für Etiketten, für Schutzverglasungen von Maschinen und Fahrzeugen, im Beleuchtungssektor, im Laden- und Regalbau, als Werbeartikel, Kaschiermedium und in Lebensmittelanwendungen.

Aufgrund der guten UV-Stabilität eignet sich die erfindungsgemäße, weiße Folie ebenfalls für Außenanwendungen, wie z.B. für Überdachungen, Außenverkleidungen, Abdeckungen, Anwendungen im Bausektor, Lichtwerbeprofile und im Verkehrssektor.

Die Erfindung wird im folgenden anhand von Ausführungsbeispielen näher erläutert.

Die Messung der einzelnen Eigenschaften erfolgt dabei gemäß der folgenden Normen bzw. Verfahren.

**Meßmethoden**

**Oberflächenglanz**

Der Oberflächenglanz wird bei einem Meßwinkel von 20 ° nach DIN 67530 gemessen.

**Lichttransmission**

Unter der Lichttransmission ist das Verhältnis des insgesamt durchgelassenen Lichtes zur einfallenden Lichtmenge zu verstehen.

Die Lichttransmission wird mit dem Meßgerät "Hazegard plus" nach ASTM D 1003 gemessen.

**Oberflächendefekte, homogene Einfärbung**

Die Oberflächendefekte und die homogene Einfärbung werden visuell bestimmt.

**Mechanische Eigenschaften**

Der E-Modul, die Reißfestigkeit und die Reißdehnung werden in Längs- und Querrichtung nach ISO 527-1-2 gemessen.

**SV (DCE), IV (DCE)**

Die Standardviskosität SV (DCE) wird angelehnt an DIN 53726 in Dichloressigsäure gemessen.

Die intrinsische Viskosität (IV) berechnet sich wie folgt aus der Standardviskosität (SV) IV (DCE) = $6{,}67 \cdot 10^{-4}$ SV (DCE) + 0,118

**Bewitterung (beidseitig), UV-Stabilität**

Die UV-Stabilität wird nach der Testspezifikation ISO 4892 wie folgt geprüft

| | |
|---|---|
| Testgerät | Atlas Ci 65 Weather Ometer |
| Testbedingungen | ISO 4892, d. h. künstliche Bewitterung |
| Bestrahlungszeit | 1000 Stunden (pro Seite) |
| Bestrahlung | 0,5 W/m$^2$, 340 nm |
| Temperatur | 63 °C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben dann wieder 102 Minuten UV-Licht usw. |

**Gelbwert**

Der Gelbwert G ist die Abweichung von der Farblosigkeit in Richtung "Gelb" und wird gemäß DIN 6167 gemessen. Gelbwert G-Werte von ≤5 sind visuell nicht sichtbar.

In den nachstehenden Beispielen und Vergleichsbeispielen handelt es sich jeweils um einschichtige und mehrschichtige weiße Folien, die auf der beschriebenen Extrusionsstraße hergestellt werden.

Alle Folien wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, der Verfärbung, der Oberflächendefekte, der Lichttransmission und des Glanzes geprüft.

**Vergleichs-Beispiel 1**

Es wird eine 50 μm dicke, weiße Folie hergestellt, die als Hauptbestandteil Polyethylenterephthalat, 7,0 Gew.-% Titandioxid und 1,0 Gew.-% des UV-Stabilisators 2-(4,6-Diphenyl-1,3,5-triazin-2-yl)-5-(hexyl)oxyphenol (®Tinuvin 1577 der Firma Ciba-Geigy) enthält.

Das Titandioxid ist vom Rutiltyp, hat einen mittleren Teilchendurchmesser von 0,20 $\mu$m und ist mit $Al_2O_3$ gecoatet.

Tinuvin 1577 hat einen Schmelzpunkt von 149°C und ist bis ca. 330°C thermisch stabil.

Zwecks homogener Verteilung werden 7,0 Gew.-% Titandioxid und 1,0 Gew.-% des UV-Stabilisators direkt beim Rohstoffhersteller in das Polyethylenterephthalat eingearbeitet.

Das Polyethylenterephthalat, aus dem die weiße Folie hergestellt wird, hat eine Standardviskosität SV (DCE) von 810, was einer intrinsischen Viskosität IV (DCE) von 0,658 dl/g entspricht. Der Feuchtigkeitsgehalt liegt bei < 0,2 %.

Die hergestellte weiße PET-Folie hat folgendes Eigenschaftsprofil:

- Dicke : 50 $\mu$m
- Oberflächenglanz 1. Seite : 72 (Meßwinkel 20 °) 2. Seite : 68
- Lichttransmission : 28 %
- Oberflächendefekte pro m² : keine E-Modui längs : 4300 N/mm²
- E-Modul quer : 5600 N/mM²
- Reißfestigkeit längs : 190 N/mm²
- Reißfestigkeit quer : 280 N/mm²
- Reißdehnung längs : 170 %
- Reißdehnung quer : 85 %
- Gelbzahl (YID) : 48
- Einfärbung : homogen

Nach je 1000 Stunden Bewitterung pro Seite mit Atlas Ci 65 Weather Ometer zeigt die PET-Folie folgende Eigenschaften:

- Dicke : 50 $\mu$m
- Oberflächenglanz 1. Seite : 70 (Meßwinkel 20°) 2. Seite : 66
- Lichttransmission : 27 %
- Oberflächendefekte : keine (Risse, Versprödungen)
- Gelbzahl (YID) : 49
- E-Modul längs : 4150 N/mm²
- E-Modul quer : 5600 N/mm²
- Reißfestigkeit längs : 170 N/mm²
- Reißfestigkeit quer : 250 N/mm²
- Reißdehnung längs : 150 %
- Reißdehnung quer : 70 %
- Einfärbung : homogen

**Vergleichs-Beispiel 2**

Analog Beispiel 1 wird eine weiße Folie hergestellt, wobei der UV-Stabilisator 2-(4,6-Diphenyl-1,3,5-triazin-2-yl)-5-(hexyl)-oxyphenol (®Tinuvin 1577) in Form eines Masterbatches zudosiert wird. Das Masterbatch setzt sich aus 5 Gew.-% ®Tinuvin 1577 als Wirkstoffkomponente und 95 Gew.-% des Polyethylenterephthalats aus Beispiel 1 zusammen.

Vor der Extrusion werden 90 Gew.-% des mit Titandioxid ausgerüsteten Polyethylenterephthalats aus Beispiel 1 mit 10 Gew.-% des Masterbatches bei 170°C getrocknet. Die Extrusion und Folienherstellung erfolgt analog zu Beispiel 1.

Die hergestellte weiße PET-Folie hat folgendes Eigenschaftsprofil:

- Dicke : 50 $\mu$m
- Oberflächenglanz 1. Seite : 74 (Meßwinkel 20°) 2. Seite : 71
- Lichttransmission : 27 %
- Oberflächendefekte : keine
  (Stippen, Orangenhaut, Blasen usw.)
- E-Modul längs : 4200 N/mm²
- E-Modul quer : 5650 N/mm²
- Reißfestigkeit längs : 160 N/mm²
- Reißfestigkeit quer : 250 N/mm²
- Reißdehnung längs : 160 %

- Reißdehnung quer : 75 %
- Gelbzahl : 46
- Einfärbung : homogen

Nach je 1000 Stunden Bewitterung pro Seite mit Atlas Ci 65 Weather Ometer zeigt die PET-Folie folgende Eigenschaften:

- Dicke : 50 $\mu$m
- Oberflächenglanz 1. Seite : 72
- (Meßwinkel 20°) 2. Seite : 70
- Lichttransmission : 25 %
- Trübung : 4,1 %
- Oberflächendefekte
- (Risse, Versprödung) : keine
- Gelbzahl (YID) : 47
- E-Modul längs : 4050 N/mm$^2$
- E-Modul quer : 5500 N/mm$^2$
- Reißfestigkeit längs : 151 N/mm$^2$
- Reißfestigkeit quer : 238 N/mm$^2$
- Reißdehnung längs : 152 %
- Reißdehnung quer : 68 %

**Vergleichs-Beispiel 3**

Analog Beispiel 2 wird eine weiße 350 $\mu$m dicke Folie hergestellt.
Die hergestellte PET-Folie hat folgendes Eigenschaftsprofil:

- Dicke : 350 $\mu$m
- Oberflächenglanz 1. Seite : 70
- (Meßwinkel 20 °) 2. Seite : 60
- Lichttransmission : 10 %
- Oberflächendefekte pro m$^2$
- (Stippen, Orangenhaut, Blasen usw.) : keine
- Gelbzahl : 50
- E-Modul längs : 3600 N/mm$^2$
- E-Modul quer : 4200 N/mm$^2$
- Reißfestigkeit längs : 180 N/mm$^2$
- Reißfestigkeit quer : 200 N/mm$^2$
- Reißdehnung längs : 220 %
- Reißdehnung quer : 190 %

Nach je 1000 Stunden Bewitterung pro Seite mit Atlas Ci 65 Weather Ometer zeigt die PET-Folie folgende Eigenschaften:

- Dicke : 350 $\mu$m
- Oberflächenglanz 1. Seite : 68
- (Meßwinkel 20°) 2. Seite : 65
- Lichttransmission : 9%
- Oberflächendefekte
- (Risse, Versprödung) : keine
- Gelbzahl (YID) : 52
- E-Modul längs : 3500 N/mm$^2$
- E-Modul quer : 4050 N/mm$^2$
- Reißfestigkeit längs : 165 N/mm$^2$
- Reißfestigkeit quer : 185 N/mm$^2$
- Reißdehnung längs : 200 %
- Reißdehnung quer : 170 %

**Beispiel 1**

Nach der Koextrusionstechnologie wird eine 50 μm dicke mehrschichtige PET-Folie mit der Schichtreihenfolge A-B-A hergestellt, wobei B die Kernschicht und A die Deckschichten repräsentieren. Die Kernschicht B ist 48 μm dick und die beiden Deckschichten, weiche die Kernschicht überziehen, sind jeweils 1 μm dick.

Das für die Kemschicht B eingesetzte mit Titandioxid ausgerüstete Polyethylenterephthalat ist identisch mit dem aus Beispiel 2. Das Polyethylenterephthalat der Deckschichten A sind identisch mit dem Polyethylenterephthalat aus Beispiel 2, enthält aber kein Titandioxid.

Analog Beispiel 2 wird das 5 Gew.-%ige ®Tinuvin 1577 Masterbatch eingesetzt, wobei aber lediglich den 1 μm dicken Deckschichten 20 Gew.-% des Masterbatches über die Masterbatchtechnologie zudosiert werden.

Die hergestellt weiße, mehrschichtige, in den Deckschichten UV-stabilisierte PET-Folie hat folgendes Eigenschaftsprofil:

- Schichtaufbau : A-B-A
- Gesamtdicke : 50 μm
- Oberflächenglanz 1. Seite : 124
- (Meßwinkel 20°) 2. Seite : 119
- Lichttransmission : 30 %
- Oberflächendefekte
  (Stippen, Orangenhaut, Blasen, usw.) : keine
- E-Modul längs : 4300 N/mm$^2$
- E-Modul quer : 5720 N/mm$^2$
- Reißfestigkeit längs : 180 N/mm$^2$
- Reißfestigkeit quer : 265 N/mm$^2$
- Reißdehnung längs : 165 %
- Reißdehnung quer : 85 %
- Gelbzahl /YID) : 40
- Einfärbung : homogen

Nach 1000 Stunden Bewitterung pro Seite mit Atlas CI 65 Weather Ometer zeigt die mehrschichtige Folie folgende Eigenschaften:

- Schichtaufbau : A-B-A
- Gesamtdicke : 50 μm
- Oberflächenglanz 1. Seite : 120
- (Meßwinkel 20°) 2. Seite : 115
- Lichttransmission : 28 %
- Oberflächendefekte : keine
  (Stippen, Orangenhaut, Blasen, usw.)
- E-Modul längs : 4175 N/mm$^2$
- E-Modul quer : 5650 N/mm$^2$
- Reißfestigkeit längs : 165 N/mm$^2$
- Reißfestigkeit quer : 250 N/mm$^2$
- Reißdehnung längs : 155 %
- Reißdehnung quer : 75 %
- Gelbzahl /YID) : 42
- Einfärbung : homogen

**Vergleichsbeispiel 4**

Analog Beispiel 1 wird eine 50 μm dicke PET-Monofolie hergestellt. Im Gegensatz zu Beispiel 1 enthält die Folie keine UV-Stabilisator.

Die hergestellte, unstabilisierte, weiße Folie hat folgendes Eigenschaftsprofil:

- Dicke : 50 μm
- Oberflächenglanz 1. Seite : 70
- (Meßwinkel 20°) 2. Seite : 67
- Lichttransmission : 27 %

- Oberflächendefekte          : keine
  (Stippen, Orangenhaut, Blasen, usw.)
- E-Modul längs          : 4350 N/mm$^2$
- E-Modul quer          : 5800 N/mm$^2$
- Reißfestigkeit längs          : 185 N/mm$^2$
- Reißfestigkeit quer          : 270 N/mm$^2$
- Reißdehnung längs          : 160 %
- Reißdehnung quer          : 80 %
- Gelbzahl/YID)          : 49

Nach 1000 Stunden Bewitterung pro Seite mit dem Atlas CI 65 Weather Ometer weist die Folie an den Oberflächen Risse und Versprödungserscheinungen auf. Ein präzises Eigenschaftsprofil kann daher nicht mehr gemessen werden. Außerdem zeigt die Folie eine visuell sichtbare höhere Gelbfärbung.

**Patentansprüche**

1. Weiße, biaxial orientierte Folie mit mehrschichtiger Struktur aus mindestens einer Deckschicht (A) und mindestens einer Kernschicht (B), mit einer Dicke im Bereich von 1 bis 500 μm, die als Hauptbestandteil einen kristallisierbaren Thermoplasten enthält, **dadurch gekennzeichnet, dass** sie a) mindestens einen UV-Stabilisator und b) Titandioxid als Weißpigment mit einer mittleren Teilchengröße von 0,10 bis 0,30 μm enthält, wobei die Komponenten a) und b) über die Masterbatchtechnologie zugeführt werden und der Oberflächenglanz, gemessen nach DIN 67530 (Meßwinkel 20°), größer als 15 ist und die Lichttransmission, gemessen nach ASTM D 1003, kleiner als 80 % beträgt.

2. Folie nach Anspruch 1, **dadurch gekennzeichnet, daß** die mehrschichtige Struktur zwei Deckschichten (A) oder Deckschichten (A) und (C) und eine zwischen den Deckschichten liegende Kernschicht (B) aufweist.

3. Folie gemäß Anspruch 1 oder 2, **dadurch gekennzeichnet, daß** die Konzentration des UV-Stabilisators im Bereich von 0,01 bis 5 Gew.-%, bezogen auf das Gewicht des kristallisierbaren Thermoplasten, liegt.

4. Folie gemäß einem oder mehreren der Ansprüche 1 bis 3, **dadurch gekennzeichnet, daß** der UV-Stabilisator ausgewählt ist aus 2-Hydroxybenzotriazolen und/oder Triazinen.

5. Folie gemäß einem oder mehreren der Ansprüche 1 bis 4, **dadurch gekennzeichnet, daß** der UV-Stabilisator 2-(4,6-Diphenyl-1,3,5-triazin-2-yl)-5-(hexyl)oxy-phenol und/oder 2,2'-Methylen-bis(6-(2H-benzotriazol-2-yl)-4-(1,1,3,3-tetramethylbutyl)-phenol ist.

6. Folie gemäß einem oder mehreren der Ansprüche 1 bis 5, **dadurch gekennzeichnet, daß** das Weißpigment beschichtet ist.

7. Folie gemäß Anspruch 6, **dadurch gekennzeichnet, daß** die Beschichtung eine oxidische Beschichtung ist und vorzugsweise Oxide von Aluminium, Silicium, Zink, Magnesium oder Mischungen aus zwei oder mehreren dieser Oxide enthält.

8. Folie gemäß Anspruch 6, **dadurch gekennzeichnet, daß** die Beschichtung Alkanole, Fettsäuren, Polydiorganosiloxane und/oder Polyorganohydrogensiloxane enthält.

9. Folie gemäß einem oder mehreren der Ansprüche 1 bis 8, **dadurch gekennzeichnet, daß** das Weißpigment in einer Menge von 0,3 bis 25,0 Gew.-%, bezogen auf das Gewicht der Polymerschicht, in der das Weißpigment enthalten ist, vorhanden ist.

10. Folie gemäß einem oder mehreren der Ansprüche 1 bis 9, **dadurch gekennzeichnet, daß** sie einen optischen Aufheller und/oder einen blauen Farbstoff enthält.

11. Folie gemäß einem oder mehreren der Ansprüche 1 bis 10, **dadurch gekennzeichnet, daß** der E-Modul, gemessen nach ISO 527-1-2, in Längsrichtung größer als 3300 N/mm$^2$ und in Querrichtung größer als 4800 N/mm$^2$ ist.

12. Folie gemäß einem oder mehreren der Ansprüche 1 bis 11, **dadurch gekennzeichnet, daß** der kristallisierbare Thermoplast ausgewählt ist aus Polyethylenterephthalat, Polybutylenterephthalat, Polyethylennaphthalat und Mischungen aus einem oder mehreren dieser Thermoplasten und vorzugsweise Polyethylenterephthalat.

13. Folie gemäß Anspruch 12, **dadurch gekennzeichnet, daß** das Polyethylenterephthalat Polyethylenterephthalat-Rezyklat enthält.

14. Folie gemäß einem oder mehreren der Ansprüche 1 bis 13, **dadurch gekennzeichnet, daß** mindestens ein UV-Stabilisator in Gegenwart oder Abwesenheit eines optischen Aufhelles und/oder eines blauen Farbstoffs in der/den Deckschicht/en enthalten ist.

15. Folie gemäß einem oder mehreren der Ansprüche 1 bis 14, **dadurch gekennzeichnet, daß** mindestens ein Weißpigment in der Kernschicht (B) enthalten ist.

16. Folie gemäß einem oder mehreren der Ansprüche 1 bis 15, **dadurch gekennzeichnet, daß** mindestens ein Weißpigment in der/den Deckschicht(en) enthalten ist.

17. Folie gemäß einem oder mehreren der Ansprüche 1 bis 16, **dadurch gekennzeichnet, daß** die Folie mindestens einseitig einen Haftvermittler, einen Copolyester oder eine kratzfeste Beschichtung aufweist.

18. Folie gemäß einem der Ansprüche 12 oder 13, **dadurch gekennzeichnet, daß** das eingesetzte Polyethylenterephthalat eine Standardviskosität SV (DCE), gemessen in Dichloressigsäure nach DIN 53728, aufweist, die im Bereich von 600 bis 1000 liegt.

19. Folie gemäß einem oder mehreren der Ansprüche 1 bis 18, **dadurch gekennzeichnet, daß** die Deckschichten Polyethylenterephthalat oder Polyethylennaphthalat enthalten.

20. Folie gemäß einem oder mehreren der Ansprüche 1 bis 19, **dadurch gekennzeichnet, daß** die Deckschichten Copolymere oder Compounds aus Polyethylenterephthalat und Polyethlennaphthalat enthalten.

21. Verfahren zur Herstellung einer weißen Folie mit mehrschichtiger Struktur gemäß einem der Ansprüche 1 bis 20, **dadurch gekennzeichnet, daß** man den kristallisierbaren Thermoplast im Extruder zusammen mit a) mindestens einem UV-Stabilisator und b) Titandioxid als Weißpigment mit einer mittleren Teilchengröße von 0,10 bis 0,30 $\mu$m aufschmilzt, auf eine Kühlwalze extrudiert, biaxial orientiert, fixiert und aufrollt, wobei die Zugabe des UV-Stabilisators und/oder Weißpigments über die Masterbatchtechnologie durchgeführt wird.

22. Verfahren gemäß Anspruch 21, **dadurch gekennzeichnet, daß** der kristallisierbare Thermoplast vor dem Aufschmelzen im Extruder getrocknet wird.

23. Verwendung einer Folie gemäß einem oder mehreren der Ansprüche 1 bis 20 für Innenraumverkleidungen und Außenanwendungen.

24. Verwendung gemäß Anspruch 23 für Messebau und Messeartikel, für Displays, für Schilder, für Etiketten, für Schutzverglasungen von Maschinen und Fahrzeugen, im Beleuchtungssektor, im Laden- und Regalbau, als Werbeartikel, Kaschiermedium und in Lebensmittelanwendungen sowie für Überdachungen, Außenverkleidungen, Abdeckungen, Anwendungen im Bausektor, Lichtwerbeprofile und im Verkehrssektor.


**Claims**

1. A white, biaxially oriented film with multilayer structure composed of at least one outer layer (A) and of at least one core layer (B), with a thickness in the range from 1 to 500 $\mu$m, which comprises, as main constituent, a crystallizable thermoplastic, wherein the film comprises a) at least one UV stabilizer and b) titanium dioxide as white pigment having an average particle size of from 0.10 to 0.30 $\mu$m, where components a) and b) are introduced by way of masterbatch technology and the surface gloss, measured to DIN 67530 (measurement angle 20°), is greater than 15 and the luminous transmittance, measured to ASTM D1003, is less than 80 %.

2. The film as claimed in claim 1, wherein the multilayer structure has two outer layers (A) or outer layers (A) and (C), and has a core layer (B) lying between the outer layers.

3. The film as claimed in claim 1 or 2, wherein the concentration of the UV stabilizer is in the range from 0.01 to 5 % by weight, based on the weight of the crystallizable thermoplastic.

4. The film as claimed in one or more of claims 1 to 3, wherein the UV stabilizer has been selected from the class consisting of 2-hydroxybenzotriazoles and/or triazines.

5. The film as claimed in one or more of claims 1 to 4, wherein the UV stabilizer is 2-(4,6-diphenyl-1,3,5-triazin-2-yl)-5-(hexyl)oxyphenol and/or 2,2'-methylenebis(6-(2H-benzotriazol-2-yl)-4-(1,1,3,3-tetramethylbutyl)phenol.

6. The film as claimed in one or more of claims 1 to 5, wherein the white pigment has been coated.

7. The film as claimed in claim 6, wherein the coating is an oxidic coating, and preferably comprises oxides of aluminum, silicon, zinc or magnesium, or mixtures of two or more of these oxides.

8. The film as claimed in claim 6, wherein the coating comprises alkanols, fatty acids, polydiorganosiloxanes and/or polyorganohydrosiloxanes.

9. The film as claimed in one or more of claims 1 to 8, wherein the amount of white pigment present is from 0.3 to 25.0 % by weight, based on the weight of the polymer layer which comprises the white pigment.

10. The film as claimed in one or more of claims 1 to 9, which comprises an optical brightener and/or a blue dye.

11. The film as claimed in one or more of claims 1 to 10, wherein the longitudinal modulus of elasticity is greater than 3300 N/mm$^2$ and the transverse modulus of elasticity is greater than 4800 N/mm$^2$, measured to ISO 527-1-2.

12. The film as claimed in one or more of claims 1 to 11, wherein the crystallizable thermoplastic has been selected from the class consisting of polyethylene terephthalate, polybutylene terephthalate, polyethylene naphthalate and mixtures of one or more of these thermoplastics, and preferably polyethylene terephthalate.

13. The film as claimed in claim 12, wherein the polyethylene terephthalate comprises recycled polyethylene terephthalate material.

14. The film as claimed in one or more of claims 1 to 13, wherein at least one UV stabilizer is present in the outer layer (s), in the presence or absence of an optical brightener and/or a blue dye.

15. The film as claimed in one or more of claims 1 to 14, wherein at least one white pigment is present in the core layer (B).

16. The film as claimed in one or more of claims 1 to 15, wherein at least one white pigment is present in the outer layer(s).

17. The film as claimed in one or more of claims 1 to 16, wherein the film has an adhesion promoter, a copolyester, or a scratch-resistant coating on at least one surface.

18. The film as claimed in either of claims 12 and 13, wherein the polyethylene terephthalate used has a standard viscosity SV (DCA), measured in dichloroacetic acid to DIN 53728, in the range from 600 to 1000.

19. The film as claimed in one or more of claims 1 to 18, wherein the outer layers comprise polyethylene terephthalate or polyethylene naphthalate.

20. The film as claimed in one or more of claims 1 to 19, wherein the outer layers comprise copolymers or compounds made from polyethylene terephthalate and polyethylene naphthalate.

21. A process for producing a white film with a multilayer structure as claimed in any of claims 1 to 20, which comprises melting the crystallizable thermoplastic in the extruder together with a) at least one UV stabilizer and b) titanium dioxide as white pigment having an average particle size of from 0.10 to 0.30 $\mu$m, extruding it onto a chill roll, orienting it biaxially, heat-setting it and winding it up, where the UV stabilizer and/or white pigment is added by way of masterbatch technology.

22. The process as claimed in claim 21, wherein the crystallizable thermoplastic is dried prior to melting in the extruder.

23. The use of a film as claimed in one or more of claims 1 to 20 for interior decoration or outdoor applications.

24. The use as claimed in claim 23 for constructing exhibition stands or for exhibition requisites, for displays, for placards, for labels, for protective glazing of machines or of vehicles, in the lighting sector, in the fitting-out of shops or of stores, as a promotional requisite or a laminating medium, in applications involving food or drink, or else for roofing systems, exterior cladding, protective coverings, applications in the construction sector, illuminated advertizing profiles, or in the traffic sector.

**Revendications**

1. Feuille blanche orientée biaxialement avec une structure multicouche d'au moins une couche de revêtement (A) et d'au moins une couche intérieure (B), d'une épaisseur dans l'intervalle de 1 à 500 $\mu$m, qui contient comme composant principal une matière thermoplastique cristallisable, **caractérisée en ce qu'**elle contient a) au moins un stabilisateur aux UV et b) du dioxyde de titane en tant que pigment blanc avec une taille moyenne de particules de 0,10 à 0,30 $\mu$m, sachant que les composants a) et b) sont introduits selon la technologie des mélanges maîtres et que l'éclat superficiel, mesuré selon DIN 67530 (angle de mesure 20°), est supérieur à 15 et que la transmission de la lumière, mesurée selon ASTM D 1003, est inférieure à 80%.

2. Feuille selon la revendication 1, **caractérisée en ce que** la structure multicouche comporte deux couches de revêtement (A) ou des couches de revêtement (A) et (C) et une couche intérieure (B) disposée entre les couches de revêtement.

3. Feuille selon la revendication 1 ou 2, **caractérisée en ce que** la concentration du stabilisateur aux UV est comprise dans l'intervalle de 0,01 à 5 % en poids, rapporté au poids de la matière thermoplastique cristallisable.

4. Feuille selon l'une ou plusieurs des revendications 1 à 3, **caractérisée en ce que** le stabilisateur aux UV est choisi parmi les 2-hydroxybenzotriazoles et/ou les triazines.

5. Feuille selon l'une ou plusieurs des revendications 1 à 4, **caractérisée en ce que** le stabilisateur aux UV est le 2-(4,6-diphényl-1,3,5-triazin-2-yl)-5-(hexyl)oxy-phénol et/ou le 2,2'-méthylèn-bis(6-(2H-benzotriazol-2-yl)-4-(1,1,3,3-tétraméthylbutyl)-phénol.

6. Feuille selon l'une ou plusieurs des revendications 1 à 5, **caractérisée en ce que** le pigment blanc est revêtu.

7. Feuille selon la revendication 6, **caractérisée en ce que** le revêtement est un revêtement d'oxyde et contient de préférence des oxydes d'aluminium, de silicium, de zinc, de magnésium ou des mélanges de deux ou plusieurs de ces oxydes.

8. Feuille selon la revendication 6, **caractérisée en ce que** le revêtement contient des alcanols, des acides gras, des polydiorganosiloxanes et/ou des polyorganohydrogénosiloxanes.

9. Feuille selon l'une ou plusieurs des revendications 1 à 8, **caractérisée en ce que** le pigment blanc est présent en une quantité de 0,3 à 25,0 % en poids, rapporté au poids de la couche de polymère dans laquelle le pigment blanc est contenu.

10. Feuille selon l'une ou plusieurs des revendications 1 à 9, **caractérisée en ce qu'**elle contient un azurant optique et/ou un colorant bleu.

11. Feuille selon l'une ou plusieurs des revendications 1 à 10, **caractérisée en ce que** le module d'élasticité, mesuré d'après ISO 527-1-2, est supérieur à 3 300 N/mm$^2$ dans le sens de la longueur et est supérieur à 4 800 N/mm$^2$ dans le sens de la largeur.

12. Feuille selon l'une ou plusieurs des revendications 1 à 11, **caractérisée en ce que** la matière thermoplastique cristallisable est choisie parmi le poly(éthylène téréphtalate), le poly(butylène téréphtalate), le poly(éthylène naphtalate) et des mélanges d'une ou de plusieurs de ces matières thermoplastiques et, de préférence, du poly(éthylène téréphtalate).

**13.** Feuille selon la revendication 12, **caractérisée en ce que** le poly(éthylène téréphtalate) contient du poly(éthylène téréphtalate) de recyclage.

**14.** Feuille selon l'une ou plusieurs des revendications 1 à 13, **caractérisée en ce qu'**au moins un stabilisateur aux UV est contenu dans la (les) couche(s) de revêtement en la présence ou en l'absence d'un azurant optique et/ou d'un colorant bleu.

**15.** Feuille selon l'une ou plusieurs des revendications 1 à 14, **caractérisée en ce qu'**au moins un pigment blanc est contenu dans la couche intérieure (B).

**16.** Feuille selon l'une ou plusieurs des revendications 1 à 15, **caractérisée en ce qu'**au moins un pigment blanc est contenu dans la (les) couche(s) de revêtement.

**17.** Feuille selon l'une ou plusieurs des revendications 1 à 16, **caractérisée en ce que** la feuille comporte au moins sur une face un agent de pompage, un copolyester ou un enduit résistant à l'abrasion.

**18.** Feuille selon l'une des revendications 12 ou 13, **caractérisée en ce que** le poly(éthylène téréphtalate) utilisé présente une viscosité standard SV (DCE), mesurée d'après DIN 53728 dans l'acide dichloroacétique, qui est comprise dans l'intervalle de 600 à 1 000.

**19.** Feuille selon l'une ou plusieurs des revendications 1 à 18, **caractérisée en ce que** les couches de revêtement contiennent du poly(éthylène téréphtalate) ou du poly(éthylène naphtalate).

**20.** Feuille selon l'une ou plusieurs des revendications 1 à 19, **caractérisée en ce que** les couches de revêtement contiennent des copolymères ou des composés de poly(éthylène téréphtalate) et de poly(éthylène naphtalate).

**21.** Procédé de fabrication d'une feuille blanche à structure multicouche selon l'une des revendications 1 à 20, **caractérisé en ce que** l'on fond ensemble la matière thermoplastique cristallisable dans l'extrudeuse avec a) au moins un stabilisateur aux UV et b) du dioxyde de titane en tant que pigment blanc avec une taille moyenne de particules de 0,10 à 0,30 $\mu$m, qu'on l'extrude sur un rouleau de refroidissement, qu'on l'oriente biaxialement, qu'on la fixe et qu'on l'enroule, sachant que l'addition du stabilisateur aux UV et/ou du pigment blanc est effectuée selon la technologie des mélanges maîtres.

**22.** Procédé selon la revendication 21, **caractérisé en ce que** la matière thermoplastique cristallisable est séchée avant la fusion dans l'extrudeuse.

**23.** Utilisation d'une feuille selon l'une ou plusieurs des revendications 1 à 20 pour des revêtements intérieurs et des applications extérieures.

**24.** Utilisation selon la revendication 23 pour des constructions et des articles d'exposition, pour des affichages, pour des écriteaux, pour des étiquettes, pour des vitrages de protection de machines et de véhicules, dans le secteur de l'éclairage, dans l'aménagement de magasins et la construction de rayonnages, comme articles publicitaires, comme matière de laminage et dans les applications alimentaires, ainsi que pour des toitures, des revêtements extérieurs, des recouvrements, des applications dans le secteur du bâtiment, des profilés publicitaires lumineux et dans le secteur de la circulation.

Fig. 1a

2-(4,6-Diphenyl-1,3,5-triazin-2-yl)-5-(hexyl)oxyphenol

Fig. 1b

2,2'-Methylen-bis(6-(2H-benzotriazol-2-yl)-4-(1,1,3,3-tetramethylbutyl)-phenol

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0620245 A
- WO 9806575 A
- EP 0044515 A
- EP 0078633 A

**In der Beschreibung aufgeführte Nicht-Patentliteratur**

- **H. DAY ; D. M. WILES.** *J. Appl. Polym. Sci,* 1972, vol. 16, 203